# EUROPEAN PATENT APPLICATION

(11) **EP 4 737 870 A1**
(43) Date of publication of application: **06.05.2026**
(21) Application number: 24209467.0
(22) Date of filing: 29.10.2024
(51) Int. Cl.: G01J 3/02, G01J 3/28, G01J 3/12, G01J 4/04

(54) **A MULTI-CHANNEL OPTICAL SYSTEM FOR SPECTROMETRY, POLARIMETRY AND SPECTRO-POLARIMETRY AND AN OPTICAL INSTRUMENT**

(71) Applicant: Nederlandse Organisatie voor toegepast- natuurwetenschappelijk onderzoek TNO, 2595 DA 's-Gravenhage (NL)
(72) Inventor: CARON, Jerôme Fabien, 2595 DA 's-Gravenhage (NL)
(74) Representative: V.O.

(57) **Abstract**

The invention relates to a multi-channel optical system based on pupil division for spectrometry, polarimetry and spectro-polarimetry. In particular, the system comprises an entrance pupil for receiving an optical beam, the entrance pupil aperture allowing a multiple number of beam channels to pass. The optical system also comprises first optics for imaging the corresponding number of beam channels to an intermediate image, and a field stop spatially limiting the corresponding number of beam channels in the intermediate image. Further, the optical system includes second optics for imaging the spatially limited intermediate image to a pupil image, and a pupil separation module angularly separating the corresponding number of beam channels propagating from the pupil image. In addition, a multiple number of filters for filtering the corresponding number of beam channels is included.

## Description

The present invention relates to a multi-channel optical system for use in an optical instrument.

Optical remote sensing is usually done by collecting some spectral, polarimetric or spectro-polarimetric information from light received from a target. In some measurement concepts the detection is done with filters, such as spectral or polarimetric filters.

It is an object of the invention to provide an improved multi-channel optical system, in particular for use in an optical instrument for spectrometry, polarimetry or spectro-polarimetry. It is a particular object of the invention to provide a multi-channel optical system performing measurements with an improved accuracy.

Thereto, according to an aspect of the invention, a multi-channel optical system is provided, comprising an entrance pupil for receiving an optical beam, the entrance pupil aperture allowing a multiple number of beam channels to pass, first optics for imaging the corresponding number of beam channels to an intermediate image, a field stop spatially limiting the corresponding number of beam channels in the intermediate image, second optics for imaging the spatially limited intermediate image to a pupil image, a pupil separation module angularly separating the corresponding number of beam channels propagating from the pupil image, and a multiple number of filters for filtering the corresponding number of beam channels.

By allowing a multiple number of beam channels to pass, corresponding images of the same target can be projected next to each other on an instrument detector, each beam channel having its own filter. The multiple beam channels can be angularly separated using a pupil separation module. Further, by using a field stop at an intermediate image, spatial overlap between respective separated beams in the final images at the detector is prevented, though all separated beams still correspond to exactly the same part of an observed scene.

The entrance pupil aperture may include a multiple number of sub apertures for generating the corresponding number of beam channels. The multiple number of sub apertures may be virtual. Then, just a single physical entrance pupil aperture is present forming a full, undivided pupil, allowing to pass the multiple number of beam channels that are separated by the pupil separation module, at the pupil image. Alternatively, the multiple number of sub apertures may be materialized, e.g. by the presence of filters.

As a relatively high amount of beam light can be collected, in the absence of a split aperture, a relatively high signal-to-noise-ratio and a high accuracy can be achieved, while on the other hand, multiple images of the same object can be analyzed, side-by-side, with mutually different filters. Advantageously, each channel can have its own filter function that does not depend on the other channel filters. The filters may be completely different or may have a spectral overlap, sharing a wavelength range.

In principle, the multi-channel optical system is a true imager as, in principle, a two-dimensional image of an observed scene is formed for each channel, without spectral dispersion.

For spectral measurements, the multi-channel optical system is very promising because the filters can be placed in a pupil image. It means that in order to increase the quantity of light that is measured, thereby reducing detection noise and increasing the measurement precision, it is only necessary to increase the dimensions of the instrument pupil. The filters placed in sub apertures of the entrance pupil aperture or in the pupil separation module are usually very sensitive to the angle of incidence. When the pupil is enlarged the angles are unmodified.

By comparison, classical instrument concepts, where the filters are placed directly on the detector, suffer from the fact that to increase the amount of detected light it is required to use a converging beam with larger angles at the detector. The larger angles are degrading significantly the filter spectral response, which cannot remain sharp. This is a very strong limiting factor for some types of measurements such as optical gas sensing where the filters try to capture very narrow spectral signatures.

By using the multi-channel optical system according to the invention, the amount of collected light can be increased as much as the optics permits, reaching a very low noise level without degrading the measurement accuracy.

Also for polarimetric measurements, the multi-channel optical system according to the invention is very promising, at least for the reason that the polarimetric filters can be placed in sub apertures of the entrance pupil aperture. They are then the first optical components in the system that interact with an incoming beam, which means the polarization created by the instrument optics does not perturb the polarimetric measurement. This allows to reach a very high accuracy. This is a significant advantage over most existing polarimeters where the filters are located inside the instrument.

The pupil separation module may include a multiple number of faceted mirror elements or a multiple number of prisms optically interacting with the corresponding number of beam channels in the pupil image. Alternatively, the pupil separation module may include another structure for angularly separating the respective beam channels, such as a phase plate with metamaterials.

Further, the multiple number of filters may be located in the corresponding number of sub apertures of the entrance pupil aperture, forming materialized sub apertures, having a specific advantage of removed instrument induced polarimetric disturbance as described above in case of polarimetric measurements. Alternatively, the filters are located elsewhere in the optical system, e.g. in the pupil separation module.

The multiple number of filters can be selected as spectral filters, for realizing a spectrometer, or as polarimetric filters, for realizing a spectrometer, or as a combination of spectral and polarimetric filters, for enabling spectro-polarimetry applications. Corresponding optical filters may be optimized for user-specified detections, such as for analyzing specific gas samples.

Advantageously, the field stop is arranged for preventing spatial overlap between respective beam channels in final images received by a detector, while all channels correspond to exactly the same part of an observed scene.

The invention also relates to an optical instrument.

In principle, the optical instrument can be used for remote sensing, microscopy or applications requiring measurement of samples at finite distances, such as in scientific research, industrial inspection, and other technical fields.

Other advantageous embodiments according to the invention are described in the following claims.

The invention will be further elucidated on the basis of exemplary embodiments which are represented in the drawings. The exemplary embodiments are given by way of non-limitative illustration of the invention. In the drawings:
Fig. 1 shows a schematic view of an optical instrument according to a first embodiment of the invention, and
Fig. 2 shows a schematic view of an optical instrument according to a second embodiment of the invention.

In the figures identical or corresponding parts are represented with the same reference numerals. The drawings are only schematic representations of embodiments of the invention, which are given by manner of non-limited examples.

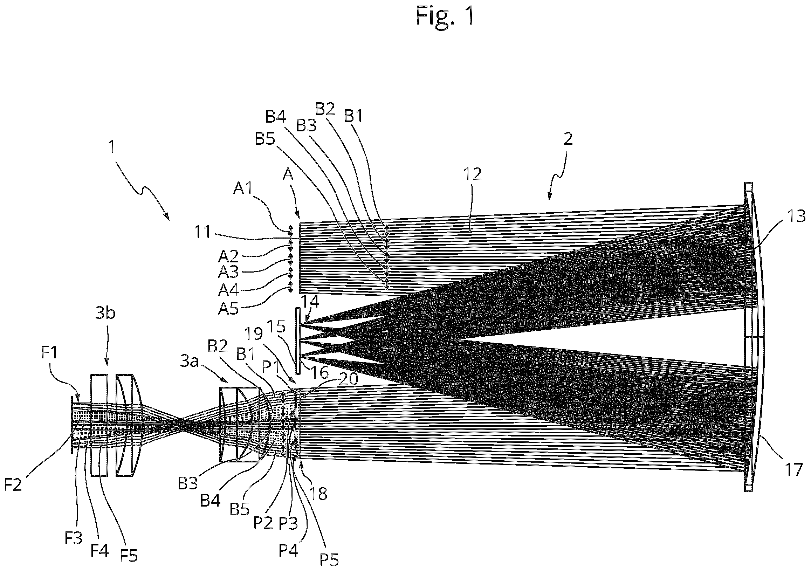

Figure 1 shows a schematic view of an optical instrument 1 according to a first embodiment of the invention. The instrument 1 can be used e.g. for remote observations e.g. from or towards space.

The instrument 1 includes a multi-channel optical system 2 according to an embodiment of the invention, as well as focus optics 3 to focus separated beams in each of the channels onto final images, and a detector 4 to receive the angularly separated final images, as described in more detail below.

The multi-channel optical system 2 shown in Fig. 1 includes a generally two dimensional entrance pupil 11 for receiving an optical beam 12. The entrance pupil 11 has an aperture A that may be divided into a multiple number of sub apertures A1-A5 for generating a corresponding number of beam channels B1-B5.

Generally, the number of the sub apertures A1-A5 in the entrance pupil aperture is at least two. In the embodiment shown in Fig. 1 the number of virtual sub apertures A1-A5 is five. However, the entrance pupil aperture may include less than five sub apertures, e.g. two, three or four sub apertures, or more than five sub apertures, e.g. six, eight, ten, twelve or even more than twelve apertures.

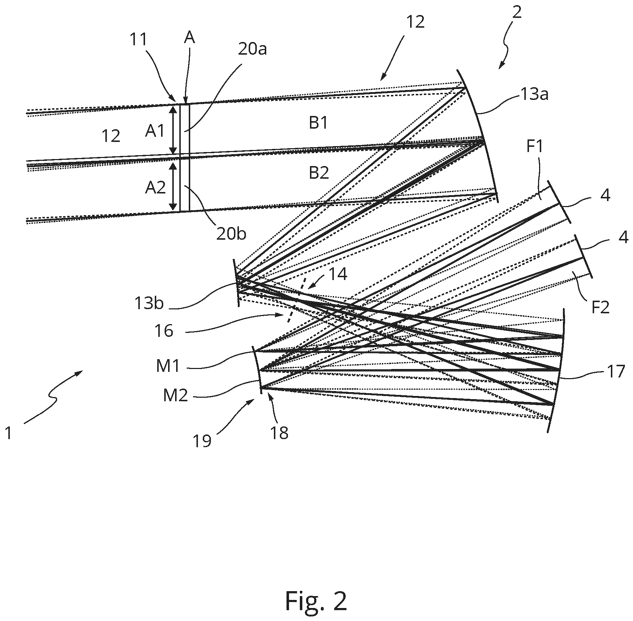

It is noted that in the embodiment shown in Fig. 1, the division of the aperture A is virtual, not materialized. Then, the sub apertures A1-A5 form a physical single aperture allowing the beam channels B1-B5 to pass. However, in the embodiment shown in Fig. 2, the division of the aperture A is materialized including respective filters, as described in more detail below referring to Fig. 2. In both embodiments, though, a number of beam channels B1-B5; B1-B2 can be identified passing through the entrance pupil aperture A and corresponding with the number of virtual or material sub apertures A1-A5; A1-A2.

The multi-channel optical system 2 shown in Fig. 1 further includes first optics 13 for imaging the corresponding number of beam channels B1-B5 to an intermediate image 14 or corresponding intermediate images at a reflecting surface 15. In the embodiment shown in Fig. 1, the first optics 13 includes a reflecting element 13 or reflecting elements. However, alternatively or additionally, other optic components could be used such as a single or a multiple number of lenses or mirrors.

On the reflecting surface 15, at the intermediate image 14, a field stop 16 is located spatially limiting the corresponding number of beam channels B1-B5 in the intermediate image.

The multi-channel optical system 2 also has second optics 17 for imaging, e.g. as a collimator, the spatially limited intermediate image 14 to a pupil image 18.

The system 2 further has a pupil separation module 19 divides the pupil into sub pupils and angularly separates the corresponding number of beam channels B1-B5 propagating from the pupil image 18.

In the embodiment shown in Fig. 1, the pupil separation module 19 includes a multiple number of prisms P1-P5 optically interacting with the corresponding number of beam channels B1-B5 in the pupil image 18. The multiple number of prisms P1-P5 corresponds to the number of sub apertures A1-A5 in the entrance pupil aperture 11.

Further, the multi-channel optical system 2 is provided with a multiple number of filters 20 for filtering the corresponding number of beam channels B1-B5. In the embodiment shown in Fig. 1, the filters 20 are located in the pupil separation module 19.

The field stop has two functions. On the one hand, the field stop 16 makes sure that all channels correspond to exactly the same part of the observed scene. On the other hand, the field stop makes sure that no spatial overlap occurs between respective channels at the final image, on the detector. In practice, the field stop 16 may include a field mask provided with an aperture.

In the embodiment shown in Fig. 1, the focus optics 3 includes a primary set of lenses 3a and a secondary set of lenses 3b focusing the separated beams B1-B5 in each of the channels onto final images F1-5, at the detector 4 that receives the spatially separated final images F1-5 and converts them to electronic signals for further processing.

In operation, e.g. for the purpose of remotely observing objects, e.g. in space, a generally two-dimensional optical beam 12 from an observed scene is incident through the entrance pupil 11 including the multiple sub apertures A1-A5 for generating a corresponding number of beam channels B1-B5 that are imaged by the first optics 13 to the reflecting surface 15 forming intermediate image 14. By application of the field stop 16, at the intermediate image, the corresponding number of beam channels B1-B5 are spatially limited and subsequently imaged, by means of the second optics 17, to a pupil image 18. The pupil separation module 19 angularly separates the corresponding number of beam channels B1-B5 for propagation from the pupil image 18, via the focus optics 3a,b to final images F1-F5 at the receptor 4.

By using the field stop 16 spatial overlap between respective separated beams B1-B5 in the final images F1-F5 received by the detector 4 is prevented, though all separated beams B1-B5 correspond to exactly the same part of an observed scene.

The multiple number of filters can be embodied as spectral filters, such as spectral band pass filters, implementing the multi-channel optical system 2 as a spectrometer, or can be embodied as polarimetric filters, e.g. linear or circular polarimetric filters, implementing the multi-channel optical system 2 as a polarimeter. Further, a combination of spectral filter and polarimetric filters can be applied, enabling use of the multi-channel optical system 2 for spectro-polarimetry applications.

The optical filters may be optimized for user-specified detection of corresponding beam channel B1-B5, e.g. for detecting a specific gas vapour.

Figure 2 shows a schematic view of an optical instrument 1 according to a second embodiment of the invention. The sensing instrument 1 has a multi-channel optical system 2 that is slightly different form the embodiment described referring to Fig. 1.

Here, the number of sub apertures A1-A2 of the entrance pupil aperture A is two. Similarly, the corresponding number of beam channels B1-B2, the number of final images F1-F2, the number of pupil separation elements of the pupil separation module 19, and the number of filters 20 is two.

It is noted that the instrument 1 generally may have another multi-channel optical system 2 arranged generally orthogonal to the shown layout, e.g. for forming four channels in total, e.g. for realizing a polarimeter typically requiring three or four channels.

Further, the focus optics 3 of the embodiment shown in Fig. 1 is absent in the embodiment shown in Fig. 2 as the respective angularly separated beams are already converging towards an image at the exit of the optical system.

In the embodiment shown in Fig. 2, the multiple number of filters 20a,b are not located in the pupil separation module 19, as is the case in the embodiment shown in Fig. 1, but in the corresponding number of sub apertures A1-A2 of the entrance pupil aperture A, thus materializing the sub apertures A1-A2 of the entrance pupil aperture A. Then, in case of polarimetric filters, disturbing polarimetric effects induced by optics in the instrument 1 can be separated from polarimetric effects in the beam 12 itself due to the instrument optics including the mirrors 13a, 13b, 17 contributing in enhanced final images F1-F2.

Further, in the embodiment shown in Fig. 2, the pupil separation module 19 includes two faceted mirror elements M1-M2 optically interacting with the corresponding number of beam channels B1-B2 in the pupil image 18 for angularly separating them, in contrast to the multiple number of prisms P1-P5 included in the embodiment shown in Fig. 1. Again, the multiple number of faceted mirror elements M1-M2 corresponds to the number of sub apertures A1-A2 in the entrance pupil aperture A.

Also, in the embodiment shown in Fig. 2, the first optics 13 includes two reflecting elements 13a,b, instead of a single reflecting element as is the case in the embodiment shown in Fig. 1, imaging the corresponding number of beam channels B1-B5 to the intermediate image 14. Here, said intermediate image 14, as well as the field stop 16 are not located on a reflector surface, but in a free space between reflecting elements 13b, 17.

In principle, there is a tradeoff between the multiple number of sub apertures A1-A5 of the entrance pupil aperture A on the one hand, and the signal to noise ratio on the other hand. Generally, the lower the number of sub apertures, the higher the signal to noise ratio, and the higher the number of sub apertures, the lower the signal to noise ratio. Based on specific application requirements, a proper choice in the number of sub apertures can be selected, in a specific design of the multi-channel optical system 2.

The above described optical instrument 1 can be adapted for remote sensing, microscopy or applications requiring measurement of samples at finite distances, such as in scientific research, industrial inspection, and other technical fields.

Various variations are possible. It will be clear to the skilled person that the invention is not limited to the exemplary embodiment represented here. Many variations are possible.

Such variants will be apparent for the person skilled in the art and are considered to fall within the scope of the invention as defined in the following claims.

## Claims

1. A multi-channel optical system for spectrometry, polarimetry and spectro-polarimetry, comprising:
- an entrance pupil for receiving an optical beam, the entrance pupil aperture allowing a multiple number of beam channels to pass;
- first optics for imaging the corresponding number of beam channels to an intermediate image;
- a field stop spatially limiting the corresponding number of beam channels in the intermediate image;
- second optics for imaging the spatially limited intermediate image to a pupil image;
- a pupil separation module angularly separating the corresponding number of beam channels propagating from the pupil image, and
- a multiple number of filters for filtering the corresponding number of beam channels.

2. An optical system according to claim 1, wherein the pupil separation system includes a multiple number of faceted mirror elements, a multiple number of prisms optically interacting with the corresponding number of beam channels in the pupil image, or a phase plate with metamaterials.

3. An optical system according to claim 1 or 2, wherein the multiple number of filters are located in the corresponding number of sub apertures of the entrance pupil aperture.

4. An optical system according to claim 1 or 2, wherein the multiple number of filters are located in the pupil separation module.

5. An optical system according to any of the preceding claims, wherein the field stop includes a field mask provided with a mask aperture.

6. An optical system according to any of the preceding claims, wherein the field stop is arranged for preventing spatial overlap between respective beam channels in final images received by a detector.

7. An optical system according to any of the preceding claims, wherein the number of the sub apertures in the entrance pupil aperture is at least two.

8. An optical system according to any of the preceding claims, wherein the multiple number of filters are spectral filters, implementing the multi-channel optical system as a spectrometer.

9. An optical system according to any of the preceding claims, wherein the multiple number of filters are polarimetric filters, implementing the multi-channel optical system as a polarimeter.

10. An optical system according to any of the preceding claims 1-8, wherein the multiple number of filters include spectral filters and polarimetric filters, for spectro-polarimetry applications.

11. An optical system according to any of the preceding claims, wherein the entrance pupil aperture is divided into a multiple number of virtual or materialized sub apertures for generating the corresponding number of beam channels.

12. An optical instrument, comprising
- a multi-channel optical system according to any of the preceding claims, and
- a detector to receive the angularly separated final images.

13. An optical instrument according to claim 12, further comprising focus optics to focus the separated beams from the multi-channel optical system in each of the channels onto the final images received by the detector.

14. An optical instrument according to claim 12 or 13, adapted for remote sensing, microscopy or applications requiring measurement of samples at finite distances, such as in scientific research, industrial inspection, and other technical fields.
